# FASCICULE DE BREVET EUROPEEN

(11) **EP 2 534 360 B1**
(45) Date de publication et mention de la délivrance du brevet: **09.01.2019**
(21) Numéro de dépôt: 11707458.3
(22) Date de dépôt: 04.02.2011
(51) Int. Cl.: F02K 1/72

(54) **TUYÈRE DE FLUX FROID D'UN TURBORÉACTEUR À DOUBLE FLUX À FLUX SÉPARÉS INCORPORANT UN INVERSEUR DE POUSSÉE À GRILLE**
SEKUNDÄRLUFTDÜSE FÜR EIN ZWEISTROMTRIEBWERK MIT SEPARATEN STRÖMEN UND EINEM GITTERSCHUBUMKEHRER
SECONDARY-AIR NOZZLE OF A TWO-FLOW JET ENGINE HAVING SEPARATED FLOWS INCLUDING A GRID THRUST REVERSER

(30) Priorité: 08.02.2010 FR 1050873
(43) Date de publication de la demande: 19.12.2012
(73) Titulaire: Safran Aircraft Engines, 75015 Paris (FR)
(72) Inventeur: BENSILUM, Stéphane, 94140 Alfortville (FR); BERTUCCHI, Jean, 94320 Thiais (FR)
(74) Mandataire: Gevers & Orès
(86) Numéro de dépôt international: PCT/FR2011/050228
(87) Numéro de publication internationale: WO 2011/095747

(56) Documents cités:
- EP-A2- 1 118 763
- GB-A- 2 441 607

## Description

La présente invention concerne le domaine des turboréacteurs à double flux et l'agencement de la nacelle, formant leur enveloppe, tenant compte des contraintes d'installation sur un aéronef. Elle vise plus particulièrement la tuyère du flux froid d'un turboréacteur à double flux à flux séparés, incorporant un inverseur de poussée du type à grilles.

### Description de l'état de la technique

L'invention concerne notamment les turboréacteurs à double flux comprenant une soufflante amont. L'amont et l'aval sont définis dans le présent document par rapport au sens d'écoulement des gaz dans le moteur. L'air entrant dans le moteur est comprimé par la soufflante. Une partie annulaire intérieure forme le flux primaire et est guidée à l'intérieur de la partie du moteur formant le générateur de gaz ; une partie annulaire extérieure de l'air issu de la soufflante forme le flux secondaire ; elle est redressée dans l'axe du moteur et bipasse celui-ci. Le flux secondaire est éjecté dans l'atmosphère soit directement, séparément du flux primaire, soit après avoir été mélangé avec ce dernier. Le rapport entre le flux secondaire et le flux primaire, désigné taux de dilution peut être important car il est un des paramètres influant sur la consommation spécifique en carburant du moteur. Un taux de dilution élevé apporte également un gain en ce qui concerne les nuisances sonores générées par le moteur.

La présente invention concerne les moteurs où la nacelle qui les enveloppe est agencée de telle manière que les flux sont séparés : les flux, primaire et secondaire, sont éjectés séparément en deux flux coaxiaux. Le flux primaire est intérieur, et le flux secondaire est donc éjecté par une tuyère annulaire formée intérieurement par la carène du générateur de gaz et extérieurement par un élément de capot annulaire. Cet élément de capot de la nacelle peut être constitué soit d'une seule pièce annulaire soit de plusieurs pièces disposées en anneau par exemple en deux demi anneaux disposés de part et d'autre d'une attache à un pylône dans un montage sous aile. Un tel exemple de moteur avec un élément de capot est décrit dans les documents EP-A2-1118763 et GB-A-2441607.

L'invention concerne plus particulièrement les moteurs à tuyères à flux séparés comportant un inverseur du type à grilles désigné également à cascade. Ce type d'inverseur connu en soi est illustré sur les figures 1 et 2 ci-jointes, reprises du brevet EP 1.004.766 du présent déposant. Ces figures montrent schématiquement un exemple de tuyère de flux froid avec inverseur à grilles. L'inverseur comprend un élément 7 de capot aval de la nacelle formant la tuyère du flux froid. Il est mobile en translation vers l'aval depuis une position rétractée où il forme la paroi externe de la veine annulaire 17 de flux froid, lors du fonctionnement du turboréacteur en poussée directe jusqu'à une position d'inversion de poussée. Il est mis en mouvement par exemple par des vérins 4 fixés sur la partie amont 6 de la nacelle. Le déplacement vers l'aval de l'élément 7 entraîne le basculement d'une pluralité de volets 12 solidaires de l'élément de capot qui viennent obturer la veine 17 et dévier le flux froid dans une direction radiale. Les volets 12 sont commandés par des bielles 14 fixées par une articulation 15 à la paroi interne 16 formée par le carénage du générateur de gaz.

Dans cette position d'inversion de poussée, il découvre des passages radiaux mettant la veine 17 en communication avec l'extérieur à travers la nacelle. Les passages radiaux sont définis à l'amont par des bords de déviation 9 conformés sur la partie amont fixe 6 de la nacelle. Le flux froid est guidé le long de ces bords de déviation. Une pluralité de grilles 8 en secteurs d'anneau est disposée en travers des passages, en périphérie de la veine 17 de flux froid. Les grilles sont formées d'ailettes 81, en secteurs d'anneau, orientées radialement par rapport à l'axe du moteur et ménageant entre elles des canaux de manière à guider le flux qui les traverse vers l'extérieur avec une composante vers l'amont du moteur pour fournir une poussée inverse. Les ailettes en secteurs d'anneau sont disposées parallèlement les unes aux autres, le long de l'axe moteur, en formant des grilles en portions de cylindre coaxial avec l'élément de capot mobile en translation.

En visant des moteurs à fort taux de dilution et par voie de conséquence à grand diamètre de soufflante, on est confronté au problème de leur montage sur l'aéronef. Lorsque le moteur doit être installé sous l'aile de l'aéronef, il est généralement suspendu à un pylône solidaire de l'aile. On pallie le problème d'encombrement des moteurs à grand diamètre avec leur nacelle en les disposant le plus en amont possible par rapport au bord d'attaque de l'aile. Cependant leur partie arrière reste à proximité de l'aile, et elle doit se situer à une hauteur inférieure à celle de l'aile. Il faut alors tenir compte de l'interaction du flux gazeux sortant, notamment le flux secondaire à la périphérie, avec la surface de l'aile, générateur de traînée. Il faut aussi prévoir une garde au sol suffisante pour qu'il n'y ait aucun contact lors des manoeuvres.

### Exposé de l'invention

La présente invention est définie dans les revendications adjointes.

Le présent déposant s'est fixé comme objectif de monter un moteur sous l'aile d'un aéronef sans avoir à sacrifier le diamètre de soufflante de celui-ci. Autrement dit, il s'agit de monter un moteur au diamètre de soufflante le plus grand possible, compte tenu des contraintes imposées par la hauteur au sol de l'aile de l'aéronef.
Le déposant s'est fixé plus particulièrement comme objectif de réaliser la partie arrière de la nacelle du moteur de telle manière que sa hauteur puisse être réduite. Dans la mesure où le diamètre hors tout du moteur à l'arrière est celui de la tuyère du flux froid et plus particulièrement de l'élément de capot extérieur de la tuyère, le déposant s'est fixé comme objectif d'en réduire la dimension verticale.
Conformément à l'invention on parvient à cet objectif avec une tuyère de flux froid d'un turboréacteur à double flux, à flux séparés présentant les caractéristiques de la revendication principale
Par rayon on entend la distance entre les grilles en un point considéré du pourtour et l'axe du moteur.
En variant le positionnement radial des grilles d'inversion de poussée selon la direction azimutale, on peut faire varier l'encombrement de la nacelle selon l'azimut et donc ovaliser ou déformer l'élément de capot de manière à l'adapter aux contraintes d'encombrement de son environnement.
Selon un mode de réalisation particulier, les rayons des grilles évoluent entre une valeur minimale et une valeur maximale, les deux valeurs correspondant à des plans, radiaux passant par l'axe, perpendiculaires l'un par rapport à l'autre. Plus particulièrement, les deux plans sont l'un vertical l'autre horizontal. La forme des grilles selon un mode de réalisation simple est ovale ou sensiblement ovale. Le grand axe de l'ovale est par exemple horizontal, mais en fonction de l'environnement du moteur il peut être incliné par rapport à la direction horizontale.

Conformément à une autre caractéristique, le bord amont, dit bord de déviation, des passages radiaux, est de forme incurvée convexe, la longueur de sa section par un plan radial passant par l'axe étant constante le long de la circonférence de l'élément de capot.

Conformément à une variante de la réalisation précédente le bord amont, dit bord de déviation, des passages radiaux, est de forme incurvée, convexe, la longueur de sa section par un plan radial passant par l'axe varie le long de la circonférence de l'élément de capot.

On dispose ainsi d'un moyen d'ajustement aérodynamique du flux d'air froid lorsque l'inverseur est en position active.

Conformément à une autre caractéristique, la longueur des grilles mesurée axialement est constante le long de la circonférence de l'élément de capot ou elle varie le long de la circonférence de l'élément de capot.

Plus particulièrement, lesdites coupes transversales d'au moins l'une des parois transversales ont une forme oblongue, notamment le plus petit desdits rayons est vertical. Il s'agit ici de la solution la plus simple pour résoudre le problème d'encombrement vertical de la partie arrière de la nacelle de flux secondaire.

Conformément à un mode de réalisation particulier, le bord aval de l'élément de capot est circulaire. Ce mode de réalisation présente l'avantage de ne déformer ou ovaliser qu'une partie seulement de la tuyère interne, pas la zone d'éjection limitant ainsi les problèmes aérodynamiques liés à l'ovalisation ou déformation, de la tuyère.

### Brève description des figures

D'autres caractéristiques et avantages de l'invention ressortiront à la lecture de la description qui suit, en référence aux figures annexées qui représentent respectivement :

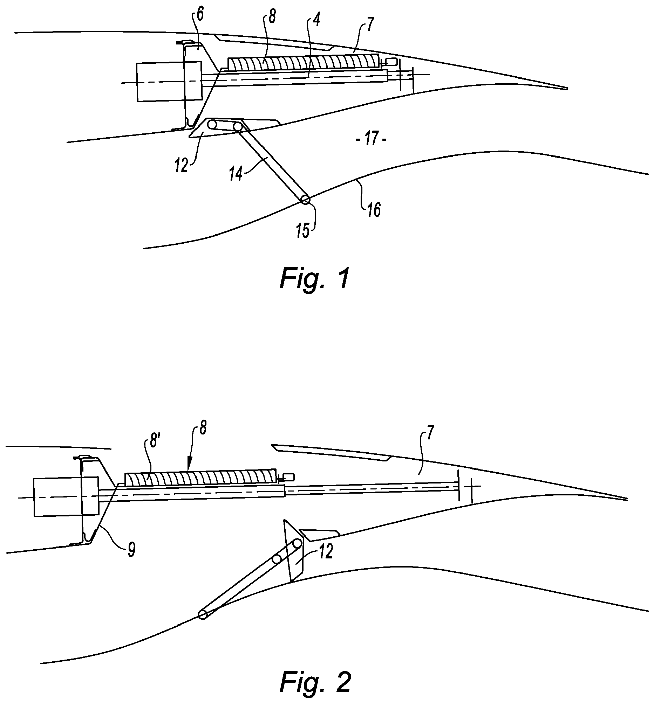

- la figure 1 une demi vue schématique en coupe longitudinale par un plan passant par l'axe de rotation d'un turboréacteur associé, d'un inverseur de poussée à grilles, en position fermée, d'un type connu ;
- la figure 2 une demi vue schématique en coupe analogue à celle de la figure 1 de l'inverseur de poussée représenté sur la figure 1 dans une configuration de fonctionnement en inversion de poussée ;
- la figure 3 une vue schématique en coupe longitudinale d'un turboréacteur avec inverseur de poussée à grilles ;
- la figure 4 une vue, dans l'axe du moteur et schématique, des grilles d'inversion de poussée selon l'art antérieur ;
- la figure 5 une vue, selon l'axe du moteur et schématique, des grilles d'inversion de poussée selon un exemple de réalisation de l'invention ;
- la figure 6, schématiquement, la position relative de deux coupes de la tuyère selon des plans passant par l'axe, l'un étant le plan vertical l'autre le plan horizontal ;
- la figure 7 une vue, selon l'axe du moteur et schématique, des grilles d'inversion de poussée selon un autre exemple de réalisation de l'invention ;
- la figure 8 une vue, selon l'axe du moteur et schématique, des grilles d'inversion de poussée selon encore un autre exemple de réalisation de l'invention ;
- la figure 9, schématiquement, la position relative de deux coupes de la tuyère selon des plans passant par l'axe, l'un étant le plan vertical l'autre le plan horizontal dans le cas d'un autre mode de réalisation ;
- la figure 10, schématiquement, la position relative de deux coupes de la tuyère selon des plans passant par l'axe, l'un étant le plan vertical l'autre le plan horizontal dans le cas d'un autre mode encore de réalisation.

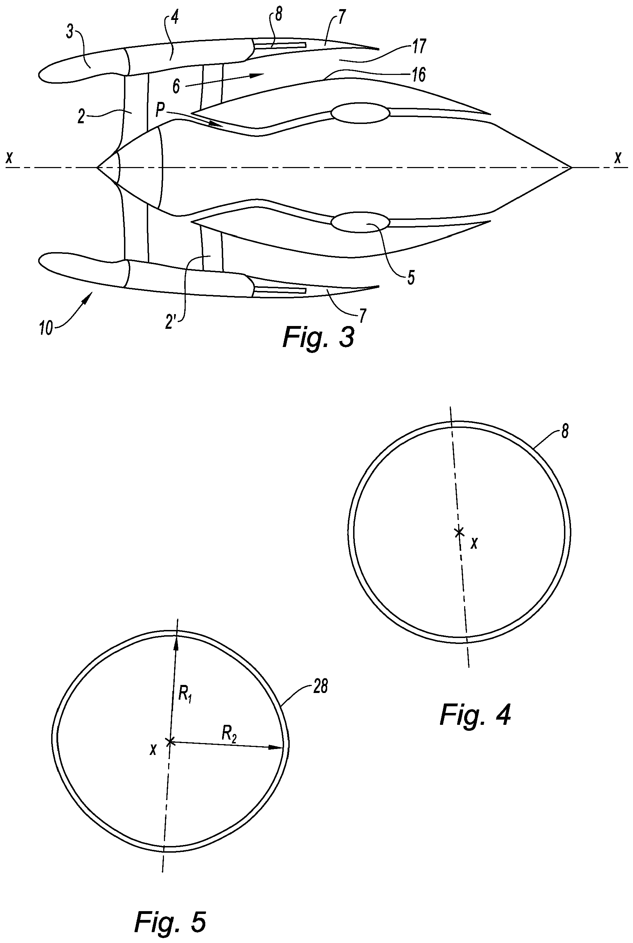

Comme on le voit sur la figure 3, un turboréacteur à double flux, à flux séparés et à soufflante avant, comprend un rotor de soufflante 2 à l'intérieur d'un carter de soufflante lui-même enveloppé dans une nacelle dont la forme est adaptée aux contraintes aérodynamiques.

En aval de la soufflante, une partie de l'air, flux primaire P est guidée à l'intérieur du moteur formant générateur de gaz. Cet air primaire P est comprimé et alimente une chambre de combustion annulaire 5. Les gaz de combustion sont détendus dans différents étages de turbine qui entraînent les rotors de soufflante et de compresseurs. En aval le flux primaire est éjecté dans la tuyère d'éjection primaire de gaz chauds.

Le restant de l'air issu de la soufflante forme le flux d'air secondaire S dont la veine est coaxiale à celle du flux primaire. Le flux secondaire est redressé dans l'axe XX du moteur par les aubes de guidage 2' et les bras du carter intermédiaire puis est éjecté par la tuyère de flux secondaire.

La nacelle comprend une entrée d'air annulaire 3, conformée pour l'alimentation du moteur, fixée sur le carter de soufflante. Le carter de soufflante est enveloppé d'un élément de nacelle fixe 4 qui s'étend jusqu'en aval des aubes 2' redressant le flux d'air secondaire issu de la soufflante. Dans le prolongement de cette partie fixe 4 de nacelle est monté l'élément de capot 7 formant tuyère annulaire avec la carène du générateur de gaz.

Comme cela l'a déjà été décrit plus haut, l'élément de capot 7 est mobile en translation pour découvrir les grilles 8 d'inversion de poussée quand il s'agit, à l'atterrissage, de réduire la vitesse de l'aéronef en créant une poussée de sens inversé par rapport à la poussée directe.

Dans les tuyères de l'art antérieur, l'ensemble de l'élément de capot 7 et les grilles 8 dans lequel elles sont logées forment un volume de révolution autour de l'axe du moteur.

Sur la figure 4 on a représenté schématiquement l'aspect de l'ensemble des grilles, seul, vu dans l'axe XX de la machine. L'ensemble est circulaire.

Conformément à l'invention, on modifie l'ensemble annulaire des grilles de telle façon que le rayon, mesuré depuis l'axe XX, ne soit pas constant quand on se déplace sur la circonférence de l'élément de capot.

On a représenté un exemple de réalisation sur la figure 5. L'ensemble de grilles que l'on désigne grille, 28, présente un rayon R1, par rapport à l'axe XX, dans le plan vertical passant par l'axe XX et un rayon R2 dans le plan horizontal passant par l'axe avec R1 < R2. La forme de la grille 28 est sensiblement ovale avec un grand axe horizontal et un petit axe vertical.

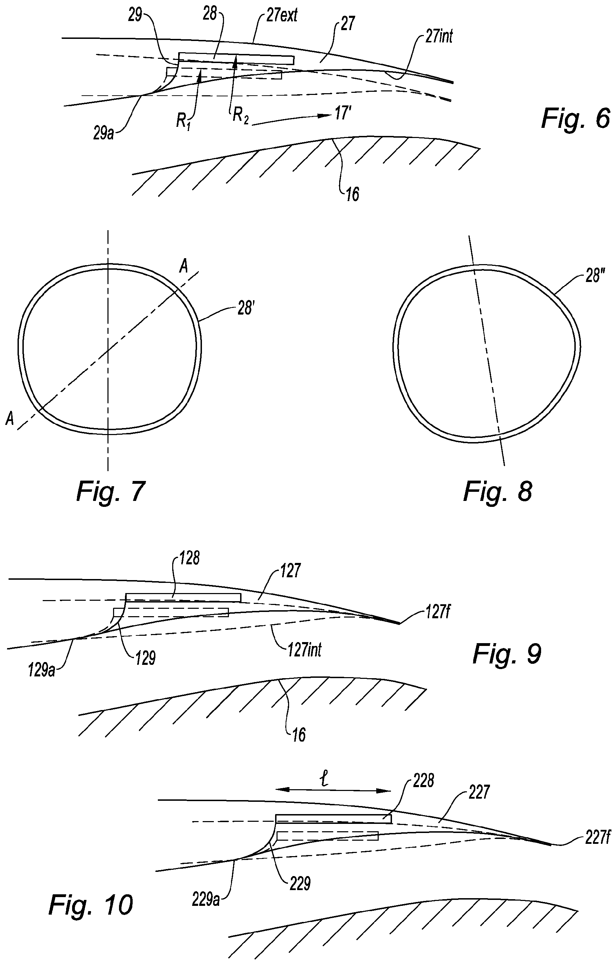

On a représenté sur la figure 6, la forme de la tuyère par rapport à l'axe dans les deux plans, respectivement vertical et horizontal. Dans un but de simplification et pour faciliter la compréhension, n'ont été représentés que la grille 28, le contour de l'élément de capot 27 avec sa paroi intérieure 27int et sa paroi extérieure 27ext et le bord de déviation 29 à l'amont des passages radiaux de déviation du flux secondaire.

Le bord de déviation 29 a une forme incurvée convexe et s'étend depuis un plan amont 29a jusqu'à l'extrémité amont de la grille 28.

La représentation en traits pleins correspond à la coupe axiale dans le plan horizontal et la représentation en traits pointillés correspond à la coupe axiale dans le plan vertical.

On observe que la paroi interne 27int, qui définit la paroi externe de la veine secondaire, n'est pas une surface de révolution autour de l'axe. Cette paroi s'étend en aval du plan 29a, représenté par un point sur les figures, constituant l'extrémité amont du bord de déviation. En amont de ce plan 29a, la paroi externe de la veine secondaire n'est pas concernée par l'invention. Ainsi la veine du flux secondaire 17' est cylindrique de révolution au niveau du plan transversal passant par l'extrémité amont 29a du bord de déviation puis elle se déforme progressivement vers l'aval. La carène 16 du générateur de gaz définissant la paroi interne de la veine du flux secondaire 17' est une surface de révolution ; elle est à section circulaire.

La paroi externe de la nacelle, dont la partie externe 27ext de l'élément de capot 27, est de rayon réduit dans le plan longitudinal vertical sur une longueur plus grande que la partie interne 27int de l'élément de capot. Pour l'application visée ici d'installation sous l'aile, on réduit ainsi l'encombrement vertical de la nacelle dans la partie de tuyère de flux secondaire.

Le mode de réalisation représenté n'est pas le seul possible ; de nombreuses variantes sont possibles permettant de s'adapter aux contraintes liées à l'environnement dans lequel le moteur est installé.

Ainsi la figure 7 montre une variante d'ovalisation de la grille d'inversion de poussée, désignée 28', dont le grand axe AA est incliné à 45° par rapport à la direction horizontale.

La figure 8 montre une autre variante possible non limitative. La grille 28" a une partie de forme ovale et une autre partie présentant des méplats.

D'autres variantes concernant la longueur de la grille ou bien la longueur et la hauteur du bord de déviation ou encore la forme de la tuyère dans le plan d'éjection du flux secondaire ou une combinaison de ces paramètres sont possibles.

Ainsi la figure 9 montre une variante où l'élément de capot 127, vu dans le plan longitudinal vertical, représenté en traits pointillés, respectivement dans le plan horizontal, représenté en traits pleins, a des parois internes 127int et 127ext évolutives entre l'extrémité amont 129a du bord de déviation 129 et le plan d'éjection 127f. Cette variante présente la particularité d'une forme circulaire de la paroi externe de la tuyère 127f dans le plan d'éjection. On voit la grille 128 dont le rayon est évolutif entre le plan vertical et le plan horizontal.

La figure 10 montre une autre variante de forme de tuyère combinant trois caractéristiques :
La grille 228 est évolutive non seulement en rayon par rapport à l'axe XX mais aussi en longueur. Sa longueur 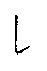 dans le plan horizontal, représenté en traits pleins est plus grande que sa longueur dans le plan vertical, représenté en traits pointillés.
La longueur du bord de déviation 229 mesurée depuis son extrémité amont 229a est en revanche constante ; comme on le voit sur la figure la longueur est la même dans le plan vertical et dans le plan horizontal.
La paroi externe 227f de la tuyère dans le plan d'éjection est circulaire.

## Revendications

1. Tuyère de flux froid d'un turboréacteur à double flux à flux séparés comprenant:
- un élément de capot annulaire (27, 127, 227) mobile en translation axiale entre une position rétractée amont pour un fonctionnement du turboréacteur en poussée directe et une position d'extension aval, ledit élément de capot annulaire (27, 127, 227) comprenant une paroi intérieure (27int, 127int, 227int) délimitant la périphérie de la veine de flux froid et une paroi extérieure (27ext, 127ext, 227ext) d'enveloppe de la nacelle, le rayon des coupes transversales d'au moins l'une des parois intérieure et extérieure n'étant pas constant, quand on se déplace le long de la circonférence de l'élément de capot, les coupes étant réalisées entre le bord amont de l'élément de capot et son bord aval, et
- un inverseur de poussée à grilles (28, 128, 228) logé au moins en partie dans l'élément de capot (27, 127, 227) dans la position rétractée entre lesdites parois intérieure (27int, 127int, 227int) et extérieure (27ext, 127ext, 227ext), et en forme de secteurs d'anneau cylindrique coaxiaux avec ledit élément de capot, les grilles de l'inverseur de poussée étant constituées d'ailettes à orientation radiale, et espacées axialement de manière à ménager entre elles des passages de guidage radiaux, l'élément de capot dégageant en position d'extension aval lesdits passages radiaux à travers l'inverseur de poussée à grilles, le rayon des secteurs d'anneau formant l'inverseur de poussée à grilles (28, 128, 228) n'est pas constant le long de la circonférence de l'élément de capot (27, 127, 227).

2. Tuyère selon la revendication précédente selon laquelle l'élément de capot annulaire comprend un bord de déviation (29) à l'amont des passages radiaux de déviation du flux secondaire, le bord de déviation ayant une forme incurvée convexe et s'étendant depuis un plan amont (29a) de l'élément de capot annulaire jusqu'à une extrémité amont de l'inverseur de poussée à grilles (28,128, 228).

3. Tuyère selon l'une des revendications précédentes selon laquelle les rayons des grilles (28) de l'inverseur de poussée évoluent entre une valeur minimale et une valeur maximale, les deux valeurs correspondant à des plans, radiaux passant par l'axe, perpendiculaires l'un par rapport à l'autre.

4. Tuyère selon la revendication précédente, lesdits deux plans étant l'un vertical, l'autre horizontal.

5. Tuyère selon l'une des revendications 2 à 4 dont la longueur d'une section du bord de déviation par un plan radial passant par l'axe du turboréacteur est constante le long de la circonférence de l'élément de capot.

6. Tuyère selon l'une des revendications 2 à 4, dont la longueur d'une section du bord de déviation par un plan radial passant par l'axe du turboréacteur varie le long de la circonférence de l'élément de capot.

7. Tuyère selon l'une des revendications précédentes dont la longueur des grilles (28, 228) de l'inverseur de poussée mesurée axialement est constante le long de la circonférence de l'élément de capot.

8. Tuyère selon l'une des revendications 1 à 6 dont la longueur des grilles (128) de l'inverseur de poussée mesurée axialement, varie le long de la circonférence de l'élément de capot.

9. Tuyère selon la revendication précédente dont les coupes transversales ont une forme oblongue, en particulier le plus petit des rayons desdites coupes transversales étant vertical.

10. Tuyère selon la revendication 9 dont le bord aval (127f, 227f) de l'élément de capot est circulaire.

## Patentansprüche

1. Kaltstrom-Düse für ein Zweistrom-Turbostrahltriebwerk mit separaten Strömen, umfassend:
- ein ringförmiges Haubenelement (27, 127, 227), das in axialer Translation zwischen einer stromaufwärts eingefahrenen Position für einen Betrieb des direkten Turbostrahltriebwerksschubs und einer stromabwärtigen Ausfahrposition beweglich ist, wobei das ringförmige Haubenelement (27, 127, 227) eine Innenwand (27int, 127int, 227int) umfasst, die den Umfang der Kaltstrom-Ader und eine Außenwand (27ext, 127ext, 227ext) der Gondelhülle abgrenzt, wobei der Radius der Querschnitte mindestens einer der Innen- und Außenwand beim Bewegen entlang des Umfangs des Haubenelements nicht konstant ist, wobei die Querschnitte zwischen der stromaufwärtigen Kante des Haubenelements und seiner stromabwärtigen Kante durchgeführt werden, und
- einen Gitterschubumkehrer (28, 128, 228), der zumindest teilweise in dem Haubenelement (27, 127, 227) in der eingefahrenen Position zwischen der Innenwand (27int, 127int, 227int) und der Außenwand (27ext, 127ext, 227ext) und in Form von mit dem Haubenelement koaxialen zylindrischen Ringsektoren untergebracht ist, wobei die Gitter des Schubumkehrers aus radial ausgerichteten Rippen bestehen, und axial beabstandet sind, um radiale Führungsdurchgänge zwischen ihnen bereitzustellen, wobei das Haubenelement die radialen Durchgänge durch den Gitterschubumkehrer in der stromabwärtigen Ausfahrposition freigibt, wobei der Radius der Ringsektoren, die den Gitterschubumkehrer (28, 128, 228) bildend, entlang des Umfangs des Haubenelements (27, 127, 227) nicht konstant ist.

2. Düse nach dem vorstehenden Anspruch, wobei das ringförmige Haubenelement eine Umlenkkante (29) stromaufwärts der radialen Durchgänge der Sekundärstromumlenkung umfasst, wobei die Umlenkkante eine konvex gekrümmte Form aufweist und sich von einer stromaufwärtigen Ebene (29a) des ringförmigen Haubenelements zu einem stromaufwärtigen Ende des Gitterschubumkehrers (28, 128, 228) erstreckt.

3. Düse nach einem der vorstehenden Ansprüche, wobei die Radien der Gitter (28) des Schubumkehrers zwischen einem Minimalwert und einem Maximalwert schwenken, wobei die zwei Werte Ebenen entsprechen, die radial durch die Achse, senkrecht zueinander verlaufen.

4. Düse nach dem vorstehenden Anspruch, wobei von den zwei Ebenen eine vertikal und die andere horizontal ist.

5. Düse nach einem der Ansprüche 2 bis 4, deren Länge eines Abschnitts der Umlenkkante durch eine radiale Ebene, die durch die Achse des Turbostrahltriebwerks verläuft, entlang des Umfangs des Haubenelements konstant ist.

6. Düse nach einem der Ansprüche 2 bis 4, deren Länge eines Abschnitts der Umlenkkante durch eine radiale Ebene, die durch die Achse des Turbostrahltriebwerks verläuft, entlang des Umfangs des Haubenelements variiert.

7. Düse nach einem der vorstehenden Ansprüche, deren Länge der axial gemessenen Gitter (28, 228) des Schubumkehrers entlang des Umfangs des Haubenelements konstant ist.

8. Düse nach einem der Ansprüche 1 bis 6, deren axial gemessene Länge der Gitter (128) des Schubumkehrers entlang des Umfangs des Haubenelements variiert.

9. Düse nach dem vorstehenden Anspruch, deren Querschnitte eine längliche Form aufweisen, wobei insbesondere der kleinste der Radien der Querschnitte vertikal ist.

10. Düse nach Anspruch 9, deren stromabwärtige Kante (127f, 227f) des Haubenelements kreisförmig ist.

## Claims

1. Cold flow nozzle of a by-pass turbojet engine having separated flows comprising:
- an annular cowl element (27, 127, 227) mobile in an axial translation between an upstream retracted position making it possible for the engine to operate under direct thrust and a downstream extended position, said annular cowl element (27, 127, 227) comprising
- an inner wall (27int, 127int, 227int) delimiting the periphery of the cold flow stream and an outer wall (27ext, 127ext, 227ext) housing the nacelle, the radius of the cross-sections of at least one of the inner and outer walls not being constant when moving around the circumference of the cowl element, the sections being made between the upstream edge of the cowl element and the downstream edge thereof, and
- a grid thrust reverser (28, 128, 228) housed at least partially in the cowl element (27, 127, 227) in the retracted position between said inner walls (27int, 127int, 227int) and outer walls (27ext, 127ext, 227ext), and in the form of cylindrical ring sectors coaxial with said cowl element, the grids of the thrust reverser being made up of blades with a radial orientation, and axially spaced apart so as to provide radial guide passages therebetween,
the cowl element opening said radial guide passages in the downstream extended position through the thrust reverser grids, the radius of the ring sectors forming the grid thrust reverser (28, 128, 228) is not constant along the circumference of the cowl element (27, 127, 227).

2. Nozzle according to the preceding claim, according to which the annular cowl element comprises a deviation edge (29) upstream of radial deflecting passages of the secondary flow, the deviation edge having a convex curved shape and extending from an upstream plane (29a) of the annular cowl element to an upstream end of the grid thrust reverser (28, 128, 228).

3. Nozzle according to one of the preceding claims, according to which the radii of the grids (28) of the thrust reverser change between a minimum value and a maximum value, the two values corresponding to radial planes perpendicular to one another passing through the axis.

4. Nozzle according to the preceding claim, said two planes being one vertical, the other horizontal.

5. Nozzle according to one of claims 2 to 4, of which the length of a section of the deviation edge by a radial plane passing through the axis of the turbojet engine is constant along the circumference of the cowl element.

6. Nozzle according to one of claims 2 to 4, of which the length of a section of the deviation edge by a radial plane passing through the axis of the turbojet engine varies around the circumference of the cowl element.

7. Nozzle according to one of the preceding claims, of which the length of the grids (28, 228) of the thrust reverser measured axially is constant around the circumference of the cowl element.

8. Nozzle according to one of claims 1 to 6, of which the length of the grids (128) of the thrust reverser measured axially varies along the circumference of the cowl element.

9. Nozzle according to the preceding claim, of which the cross-sections have an oblong shape, in particular the smallest of the radii of said cross sections being vertical,

10. Nozzle according to claim 9, of which the downstream edge (127f, 227f) of the cowl element is circular.
